# EUROPÄISCHE PATENTSCHRIFT

(11) **EP 2 014 503 B1**
(45) Veröffentlichungstag und Bekanntmachung des Hinweises auf die Patenterteilung: **22.09.2010**
(21) Anmeldenummer: 08160000.9
(22) Anmeldetag: 09.07.2008
(51) Int. Cl.: B60K 26/02

(54) **Bedienvorrichtung zum Ansteuern mindestens einer Zustandsgröße eines landwirtschaftlichen oder industriellen Nutzfahrzeugs**
Operational device for controlling at least one variable of an agricultural or industrial truck
Dispositif de commande destiné à la commande d'au moins une taille d'état d'un véhicule utilitaire agricole ou industriel

(30) Priorität: 11.07.2007 DE 102007032310
(43) Veröffentlichungstag der Anmeldung: 14.01.2009
(73) Patentinhaber: Deere & Company, Moline, IL 61265-8098 (US)
(72) Erfinder: Tarasinski, Nicolai, Dr., 67227, Frankenthal (DE); Hahn, Klaus, 68199, Mannheim (DE)
(74) Vertreter: Dehnhardt, Florian Christopher

(56) Entgegenhaltungen:
- EP-A- 0 856 432
- EP-A- 1 777 094
- DE-A1- 19 904 626
- DE-A1- 19 923 012
- FR-A- 2 828 155

## Beschreibung

Die vorliegende Erfindung betrifft eine Bedienvorrichtung zum Ansteuern mindestens einer Zustandsgröße eines landwirtschaftlichen oder industriellen Nutzfahrzeugs. Mindestens ein Bedienpedal der Bedienvorrichtung ist von einem Fuß eines Bedieners betätigbar. Mit dem mindestens einen Bedienpedal ist eine Zustandsgröße des Nutzfahrzeugs einstellbar. Des Weiteren betrifft die vorliegende Erfindung ein Verfahren zum Ansteuern mindestens einer Zustandsgröße eines landwirtschaftlichen oder industriellen Nutzfahrzeugs.

Solche Bedienvorrichtungen sind seit langem aus dem Stand der Technik bekannt. Mit ihnen kann beispielsweise die Geschwindigkeit des Nutzfahrzeugs eingestellt werden. Als Nutzfahrzeug in diesem Zusammenhang kommen insbesondere landwirtschaftliche Nutzfahrzeuge, also z.B. Traktoren, Erntemaschinen, Mähdrescher, Feldhäcksler und selbstfahrende Spritzen, aber auch industrielle Nutzfahrzeuge, also beispielsweise Baufahrzeuge, Planierraupen, Planiermaschinen, Tieflöffelbagger, Laderfahrzeuge, Kipper, Kräne und Teleskoplader, in Frage.

Weiterhin ist die so genannte Kraftrückführung oder auch Force-Feedback aus dem Bereich der Simulatortechnik bekannt und dient dort in der Regel der realistischen Darstellung von Kräften auf Bedienelemente, die im Betrieb einer realen Maschine auftreten und von dem Bediener aufgebracht bzw. überwunden werden müssen. Hierbei ist eine Stelleinrichtung bzw. ein Aktuator vorgesehen, mit welcher bzw. mit welchem das mindestens eine Bedienelement mit einer Kraft beaufschlagbar ist. Hiermit kann also das Bedienelement, das in einem solchen Fall lediglich ein elektrisches Signal über seinen Bedienzustand erzeugt, mit der Stelleinrichtung mit mindestens einer entsprechenden Kraft beaufschlagt werden, so dass das Bedienelement eine für die Art des jeweiligen Bedienelements übliche Bedienungscharakteristik aufweist.

Bei vielen Fahrzeugen sind die Bedienelemente mechanisch mit dem durch sie gestellten Maschinenteil verbunden, beispielsweise das Lenkrad über die Lenkwelle mit dem Lenkgestänge. Fällt eine solche mechanische Verbindung auf Grund einer elektronischen Ansteuerung der jeweiligen Komponente weg, so fehlt eine entsprechende Rückkopplung über die Zustände des Maschinenteils und der zu simulierenden Maschine bzw. des zu simulierenden Fahrzeugs an den Bediener. In einem solchen Fall bedient man sich der aus der Simulatortechnik bekannten Technologie, indem man das Bedienelement bzw. das Bedienpedal mit Hilfe einer Stelleinrichtung, welche von einer geeigneten Steuereinrichtung angesteuert wird, derart mit Kräften beaufschlagt, dass eine für das Bedienelement übliche Bedienungscharakteristik erzeugt werden kann. Hierdurch wird einem Bediener eine möglichst realistische Bedienung der jeweiligen angesteuerten Funktion simuliert.

Eine weitergehende Unterstützung bei der Bedienung eines Nutzfahrzeugs wird allenfalls durch Warnanzeigeelemente dem Bediener visuell oder gegebenenfalls akustisch zur Kenntnis gebracht. Hierbei sind vor allem Warnleuchten vorgesehen, welche auf einen kritischen Zustand des Nutzfahrzeugs hinweisen, beispielsweise den der überhöhten Temperatur des Motoröls oder der Kühlflüssigkeit über einem vorgebbaren oberen Grenzwert.

Eine Bedienvorrichtung mit allen Merkmalen des Oberbegriffs des Anspruchs 1 ist durch Dokument EP 1 777 094 A1 bekannt.

Der vorliegenden Erfindung liegt daher die Aufgabe zugrunde, eine Bedienvorrichtung der eingangs genannten Art anzugeben und weiterzubilden, durch welche die vorgenannten Probleme überwunden werden. Insbesondere soll einem Bediener eines Nutzfahrzeugs eine weitergehende Unterstützung bei der Bedienung des Nutzfahrzeugs gegeben werden, mit welcher ein Bediener auch auf einen kritischen oder nicht optimalen Betriebszustand des Nutzfahrzeugs in verbesserter Weise aufmerksam gemacht wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine Bedienvorrichtung der eingangs genannten Art mindestens ein Bedienpedal, insbesondere ein Gaspedal, eine Stelleinrichtung, mindestens einen Sensor und eine Steuereinrichtung auf. Das mindestens Bedienpedal ist von einem Fuß eines Bedieners betätigbar. Mit dem mindestens einen Bedienpedal ist eine Zustandsgröße des Nutzfahrzeugs einstellbar. Mit der Stelleinrichtung bzw. einem Aktuator ist das mindestens eine Bedienpedal mit einer Kraft beaufschlagbar. Mit dem mindestens einen Sensor ist eine Größe, die eine Zustandsgröße des Nutzfahrzeugs repräsentiert, detektierbar und der Steuereinrichtung übermittelbar. Mit der Steuereinrichtung ist eine Zustandsgröße des aktuellen Betriebszustands des Nutzfahrzeugs ermittelbar. Mit der Steuereinrichtung ist in Abhängigkeit des aktuellen Betriebszustands des Nutzfahrzeugs die Stelleinrichtung derart ansteuerbar, dass das mindestens eine Bedienpedal mit einer vorgebbaren veränderten Kraft beaufschlagbar ist, um dem Bediener einen nicht optimalen Betriebszustand des Nutzfahrzeugs oder einen nicht optimalen Betriebszustand mindestens einer Arbeitsfunktion wahrnehmbar zu machen. Bei der veränderten Kraft kann es sich beispielsweise um eine konstante oder um eine veränderliche Kraft handeln.

Erfindungsgemäß ist zunächst erkannt worden, dass eine Bedienung des Nutzfahrzeugs insbesondere dann vereinfacht und optimiert werden kann, wenn dem Bediener nicht lediglich durch visuelle Anzeigeinstrumente ein unsicherer oder nicht optimaler Betriebszustand angezeigt wird. Üblicherweise weist das Nutzfahrzeug ein Drehzahlmessinstrument zur Anzeige der Drehzahl des Verbrennungsmotors auf. Falls der Verbrennungsmotor dauerhaft mit einer erhöhten Drehzahl betrieben wird, die über der für den Dauerbetrieb maximal zulässigen Drehzahl liegt, erfolgt bei einem herkömmlichen Nutzfahrzeug darüber hinaus keine weitere Anzeige, von einer erhöhten Lärmentwicklung des Verbrennungsmotors abgesehen, welche bei einer relativ gut schallisolierten Kabine des Nutzfahrzeugs auch akustisch nicht in allen Fällen wahrgenommen werden kann. Dies kann zu einem Motorschaden führen und daher einen längeren Nutzungsausfall des Nutzfahrzeugs und somit hohe Kosten zur Folge haben. In erfindungsgemäßer Weise ist daher vorgesehen, dass gegebenenfalls über eine akustische und/oder optische Warneinrichtung hinaus dem Bediener in taktiler Weise ein solcher Betriebszustand des Nutzfahrzeugs zur Kenntnis gebracht wird. Dies ist insbesondere dann vorteilhaft, wenn der Bediener situationsbedingt in irgendeiner Weise unmittelbar reagieren muss, um beispielsweise eine Überlastung einer Komponente des Nutzfahrzeugs oder einen Unfall des Nutzfahrzeugs rechtzeitig verhindern zu können.

Die Steuereinrichtung kann anhand des Signals des mindestens einen Sensors berechnen, in welche Richtung bzw. Stellung das mindestens eine Bedienpedal zu bewegen wäre, um den gewünschten Zweck zu erreichen. Im Allgemeinen ist der Trend der Effekte bekannt, der bei der Verstellung einer Zustandsgröße hervorgerufen wird. Es wird die Stellung und/oder Verstellrichtung des mindestens einen Bedienpedals bestimmt, die einen optimalen Betriebszustand zur Folge hätte. Die Stelleinrichtung wird entsprechend des Ergebnisses eines Vergleichs zwischen der berechneten günstigen Bewegungsrichtung und/oder Stellung und der aktuellen Bewegungsrichtung und/oder Stellung des mindestens einen Bedienpedals angesteuert.

Der Steuereinrichtung wird vorzugsweise weiterhin eine Information über die mittels eines Bedienpedalpositionssensors erfasste aktuelle Stellung des mindestens einen Bedienpedals zugeführt, die bei der Berechnung der wünschenswerten bzw. nicht wünschenswerten Verstellrichtung bzw. Stellung des mindestens einen Bedienpedals berücksichtigt werden kann. In einigen Anwendungsfällen ist aber die Berücksichtigung der Stellung des mindestens einen Bedienpedals nicht erforderlich. Denkbar ist auch, dass die Steuereinrichtung eine Information über die Stellung des mindestens einen Bedienpedals und/oder dessen Bewegungsrichtung aus dem Signal des mindestens einen Sensors bzw. dessen Änderung ableitet.

Die Stelleinrichtung kann grundsätzlich auf zwei verschiedene Arten betrieben werden. Einerseits kann sie einen Verstellwiderstand bzw. eine Amplitude und/oder Frequenz der mechanischen Anregung des Bedienpedals erzeugen, der bzw. die proportional zur Differenz zwischen der derzeitigen Position des mindestens einen Bedienpedals und einer berechneten optimalen Position des mindestens einen Bedienpedals ist, oder auf eine andere Weise auf das mindestens eine Bedienpedal einwirken, welche stetig und vorzugsweise monoton steigend von dieser Differenz abhängt. Ist das mindestens eine Bedienpedal also besonders ungünstig eingestellt, ist es sehr schwer, es in eine noch ungünstigere Stellung zu verbringen, bzw. es vibriert recht stark und/oder schnell. In die entgegengesetzte Richtung kann es jedoch leicht bewegt werden, bzw. die Schwingungen lassen nach oder verschwinden. Andererseits besteht die Möglichkeit, dass die Stelleinrichtung erst dann wirksam ist, wenn die genannte Differenz einen bestimmten Schwellwert überschreitet. Dabei kann die Stelleinrichtung einen stufenartig ansteigenden Verstellwiderstand bewirken bzw. die Amplitude und/oder Frequenz der mechanischen Anregung in Stufen ändern. Der Verstellwiderstand bzw. die Amplitude und/oder Frequenz der mechanischen Anregung des mindestens einen Bedienpedals steigt in dieser Ausführungsform somit in mindestens einer Stufe an. Ein Vorteil liegt in der leichteren technischen Realisation, da die Stelleinrichtung im einfachsten Fall nur ein- und ausschaltbar zu gestalten ist.

Mit der Steuereinrichtung kann in Abhängigkeit des aktuellen Betriebszustands des Nutzfahrzeugs die Stelleinrichtung auch derart ansteuerbar sein, dass das mindestens eine Bedienpedal mit einer vorgebbaren veränderten Kraft beaufschlagbar ist, um dem Bediener einen unsicheren Betriebszustand des Nutzfahrzeugs oder einen unsicheren Betriebszustand mindestens einer Arbeitsfunktion wahrnehmbar zu machen.

Gemäß einer bevorzugten Ausgestaltung der vorliegenden Erfindung wird durch das Beaufschlagen des mindestens einen Bedienpedals mit der einen vorgebbaren veränderten Kraft die Bedienungscharakteristik des mindestens einen Bedienpedals veränderbar ausgestaltet. So kann beispielsweise das mindestens eine Bedienpedal mit einer Kraft derart beaufschlagt werden, dass dieses insgesamt nur unter erhöhter Kraftaufwendung von dem Bediener betätigt werden kann. Mit anderen Worten wird im Rahmen dieser Ausgestaltung die Kraft, mit welcher das mindestens eine Bedienpedal durch die Stelleinrichtung bei einem normalen Betriebszustand des Nutzfahrzeugs beaufschlagt wird, um einen konstanten Wert (Offset) erhöht, wenn kein optimaler oder sicherer Betriebszustand des Nutzfahrzeugs vorliegt.

Das mindestens eine Bedienpedal kann beispielsweise in Form eines Gaspedals ausgebildet sein, mit welchem die Motordrehzahl des Verbrennungsmotors des Nutzfahrzeugs bzw. die Geschwindigkeit des Nutzfahrzeugs einstellbar ist. Es ist auch denkbar, das mindestens eine Bedienpedal in Form eines Bremspedals oder eines Kupplungspedals auszubilden. In diesem Fall wird mit dem Bremspedal die Nutzfahrzeuggeschwindigkeit verringert. Mit dem Kupplungspedal wird eine Kupplung eines Getriebes des Nutzfahrzeugs betätigt.

Mit dem mindestens einen Sensor wird eine Größe detektiert, welche eine Zustandsgröße des Nutzfahrzeugs repräsentiert. Eine Zustandsgröße des Nutzfahrzeugs kann beispielsweise die Geschwindigkeit, die Beschleunigung, die Fahrtrichtung, der aktuell eingestellte Lenkwinkel, die Abweichung von einer vorgegebenen Fahrtrichtung, die räumliche Position des Nutzfahrzeugs, die Gierbewegung oder das Giermoment, die Bestimmung eines Hindernisses, die Drehzahl einer Motor- oder Getriebewelle, die Drehzahl mindestens eines Rads, das von einer Welle übertragene Drehmoment, das von einem Antriebsaggregat abgegebene Drehmoment, die Leistung oder die Auslastung eines Antriebsaggregats, der Energieverbrauch oder der Kraftstoffverbrauch eines Verbrauchers, der Schlupf des Nutzfahrzeugs über dem Untergrund, eine Achslast, der Druck oder der Volumenstrom oder die Volumenstromänderung einer Hydraulikflüssigkeit, der Ausfahrweg eines Zylinders, der Fahrzustand, die Triebkraft des Nutzfahrzeugs und/oder die auf das Nutzfahrzeug wirkende Kraft eines Anhängers und/oder eines Arbeitsgeräts sein. Eine auf das Nutzfahrzeug wirkende Kraft kann insbesondere eine Zugkraft, eine Querkraft und/oder eine Stützkraft sein. Dementsprechend kann mindestens ein Sensor vorgesehen sein, mit welchem eine Größe detektierbar ist, welche die Ermittlung der Geschwindigkeit, der Beschleunigung, der Fahrtrichtung, des aktuell eingestellten Lenkwinkels, der Abweichung von einer vorgegebenen Fahrtrichtung, der räumlichen Position des Nutzfahrzeugs (relativ zu einem Bezugssystem), der Gierbewegung oder des Giermoments und/oder die Bestimmung der räumlichen Position eines Hindernisses ermöglicht. Mit dem mindestens einen Sensor kann auch eine Größe detektierbar sein, welche die Ermittlung der Drehzahl einer Motor- oder Getriebewelle, der Drehzahl mindestens eines Rads, des von einer Welle übertragenen Drehmoments, des von einem Antriebsaggregat abgegebenen Drehmoments, der Leistung oder der Auslastung eines Antriebsaggregats, des Energieverbrauchs oder des Kraftstoffverbrauchs eines Verbrauchers, des Schlupfs des Nutzfahrzeugs über dem Untergrund, einer Achslast, des Drucks oder des Volumenstroms oder der Volumenstromänderung einer Hydraulikflüssigkeit, des Ausfahrwegs eines Zylinders, der auf das Nutzfahrzeug wirkenden Zugkraft eines Anhängers und/oder eines Arbeitsgeräts, insbesondere einer Zugkraft, einer Querkraft und/oder einer Stützkraft, des Fahrzustands und/oder der Triebkraft des Nutzfahrzeugs ermöglicht. Üblicherweise wird der mindestens eine Sensor derart ausgestaltet sein, dass dieser eine entsprechende Größe detektiert bzw. erfasst. Sodann wird ein von der detektierten Größe abhängiges (elektrisches) Signal erzeugt, welches der Steuereinrichtung übermittelt wird. Mit der Steuereinrichtung kann dann in Abhängigkeit des aktuellen Betriebszustands des Fahrzeugs ein Signal bzw. eine Signalfolge erzeugt und hiermit die mindestens eine Stelleinrichtung entsprechend angesteuert werden.

Im Konkreten weist die Stelleinrichtung mindestens einen Aktuator auf. Der Aktuator kann elektrisch, pneumatisch oder hydraulisch betätigbar sein. Somit kann der Aktuator in Abhängigkeit seiner Betätigung das mindestens eine Bedienpedal mit einer veränderlichen bzw. variablen Kraft beaufschlagen. Die Stelleinrichtung kann des Weiteren einen weiteren Aktuator aufweisen, welcher beispielsweise in Form einer Feder ausgebildet ist und das mindestens eine Bedienpedal mit einer konstanten Kraft bzw. mit einer konstanten Kraftkennlinie beaufschlagt.

Ein optimaler Betriebszustand des Nutzfahrzeugs liegt insbesondere dann vor, wenn das Nutzfahrzeug einen minimierten Kraftstoffverbrauch aufweist und/oder wenn die Fahrgeschwindigkeit oder der Wirkungsgrad des Nutzfahrzeugs bzw. einzelne Komponenten davon optimal an den aktuellen Betriebszustand des Nutzfahrzeugs angepasst ist bzw. sind. Mit anderen Worten werden einzelne Komponenten bzw. das gesamte Nutzfahrzeug derart eingestellt, dass deren bzw. dessen Wirkungsgrad für den aktuellen Betriebszustand des Nutzfahrzeugs optimiert bzw. daran angepasst ist. Ein aktueller Betriebszustand kann beispielsweise das Pflügen mit einem Traktor sein, wobei also an dem Traktor ein Pflug adaptiert ist. In einem weiteren Schritt kann ein anderer aktueller Betriebszustand das Einsähen von Pflanzensamen betreffen, wenn an dem Traktor eine Sämaschine adaptiert ist. Ein optimaler Betriebszustand wird auch für den Fall angestrebt, in welchem das mit dem Nutzfahrzeug und gegebenenfalls mit einem an dem Nutzfahrzeug adaptierten Arbeitsgerät bearbeitete bzw. verarbeitete Gut einen optimalen Durchsatz oder Umsatz aufweist. Ein Beispiel hierfür kann ein Traktor mit einer an dem Traktor adaptierten Rundballenpresse darstellen. In einem optimalen Betriebszustand wird die Rundballenpresse derart betrieben, dass das mit der Rundballenpresse aufgenommene Heu mit einer maximalen Fördergeschwindigkeit (maximaler Durchsatz) aufgenommen wird, ohne eine Verstopfung zu verursachen.

Ein sicherer Betriebszustand des Nutzfahrzeugs liegt insbesondere dann vor, wenn die Motorauslastung, die Neigung des Nutzfahrzeugs gegenüber der Waagrechten, das Giermoment, die Ballastierung des Nutzfahrzeugs mit einem gegebenenfalls daran adaptierten Arbeitsgerät, die im Antriebsstrang vorherrschende Drehmomentbelastung bzw. die im Antriebsstrang vorliegende Drehzahl rotierender Bauteile und/oder die Geschwindigkeit des Nutzfahrzeugs (auch bei Kurvenfahrt) einen entsprechenden vorgebbaren Grenzwert nicht überschreitet. Weitere sicherheitsrelevante Parameter sind beispielsweise auch die eingangs erwähnte Motoröltemperatur, die Temperatur der Kühlmittelflüssigkeit des Verbrennungsmotors des Nutzfahrzeugs oder der Druck einer hydraulischen Bremsanlage. Dementsprechend liegt ein sicherer Betriebszustand des Nutzfahrzeugs dann vor, wenn die entsprechenden vorgebbaren Grenzwerte nicht über- bzw. unterschritten werden. Ein sicherer Betriebszustand des Nutzfahrzeugs liegt auch dann vor, wenn sich kein Hindernis im Fahrbereich oder Wirkungsbereich des Nutzfahrzeugs befindet. Mit anderen Worten liegt ein unsicherer Betriebszustand dann vor, wenn die entsprechenden vorgebbaren Grenzwerte über- bzw. unterschritten werden und/oder wenn sich ein Hindernis im Fahrbereich oder Wirkungsbereich des Nutzfahrzeugs befindet.

Insbesondere im Falle von Zustandsgrößen, welche an dem Nutzfahrzeug vom Bediener nicht unmittelbar wahrgenommen werden können, ist die erfindungsgemäße Bedienvorrichtung für eine optimale und/oder sichere Bedienung des Nutzfahrzeugs hilfreich. Dies kann vor allem bei am Nutzfahrzeug angehängten Anhängern (z.B. eine Spritze mit einem ausgefahrenen Spritzgestänge) relevant sein, welche beispielsweise aufgrund von Bodenunebenheiten Roll- und/oder Gierbewegungen ausführen und hierbei das aus Nutzfahrzeug und Anhänger bestehende Gespann in einen gefährlichen Gesamtzustand bringen können. Das (die Fahrzeuggeschwindigkeit einstellende) mindestens eine Bedienpedal kann in einem solchen Fall derart mit einer Kraft beaufschlagt werden, dass der Bediener zu einer Auslenkung des mindestens einen Bedienpedals im Sinne einer geringeren Geschwindigkeit des Gespanns angeleitet wird.

Die Stelleinrichtung kann von der Steuereinrichtung derart angesteuert werden, dass die Stelleinrichtung das mindestens eine Bedienpedal mit einer im Wesentlichen konstanten Kraft beaufschlagt. Eine solche Vorgehensweise kann sich insbesondere auf den Zustand des mindestens einen Bedienpedals beziehen, in welchem dieses sich in der Neutralstellung befindet und nicht von einem Bediener betätigt wird.

Zusätzlich oder alternativ hierzu kann die Stelleinrichtung das mindestens eine Bedienpedal mit einem vorgebbaren Kraftverlauf beaufschlagen. Der vorgebbare Kraftverlauf kann in Abhängigkeit des Betätigungswegs bzw. der Auslenkung des mindestens einen Bedienpedals oder der anzusteuernden Zustandsgröße eine stetige analytische Funktion aufweisen. Die analytische Funktion kann sich zeitlich verändern und hierbei einem veränderten Betriebszustand des Nutzfahrzeugs Rechnung tragen.

Insbesondere wenn das Nutzfahrzeug sich einem unsicheren Betriebszustand nähert oder der Bediener eine Arbeitsfunktion oder eine Fahrzeugfunktion missbraucht, kann vorgesehen sein, dass die Stelleinrichtung das in der neutralen Position befindliche oder in einer beliebigen Position befindliche mindestens eine Bedienpedal mit einer zeitlich veränderlichen Kraft beaufschlagt. Dies ist insbesondere bei Betriebszuständen hilfreich, bei welchen die jeweils vorliegende Zustandsgröße oder die jeweils vorliegende kritische Größe nicht unmittelbar von dem Bediener wahrgenommen werden kann. Dies kann beispielsweise das Drehmoment betreffen, welches bei einem Traktor über die Zapfwelle auf ein an dem Traktor adaptiertes Arbeitsgerät übertragen wird und welches einen vorgebbaren Grenzwert überschreitet. Dementsprechend kann das mindestens eine Bedienpedal von der Stelleinrichtung derart mit einer zeitlich variierten Kraft beaufschlagt werden, dass das mindestens eine Bedienpedal eine Art Rüttelbewegung ausführt und den Bediener auf taktile Art und Weise auf einen kritischen Betriebszustand aufmerksam macht.

Ganz allgemein und gemäß einer besonders bevorzugten Ausführungsform wird das mindestens eine Bedienpedal mit einer vorgebbaren veränderten Kraft dann beaufschlagt, wenn ein von dem optimalen Betriebszustand abweichender Betriebszustand vorliegt. Ebenfalls ganz allgemein und auch gemäß einer besonders bevorzugten Ausführungsform wird das mindestens eine Bedienpedal mit einer vorgebbaren veränderten Kraft dann beaufschlagt, wenn ein von dem sicheren Betriebszustand abweichender Betriebszustand vorliegt.

Im Folgenden wird auf relativ konkrete Situationen eingegangen, bei welchen das mindestens eine Bedienpedal mit einer vorgebbaren veränderten Kraft beaufschlagt wird.

Dies ist unter anderem dann der Fall, wenn der aktuelle Betriebszustand bzw. eine aktuelle Zustandsgröße des Nutzfahrzeugs oder einer Arbeitsfunktion des Nutzfahrzeugs einen vorgegebenen Grenzwert über- oder unterschreitet. Hierbei kann es sich beispielsweise um einen über einem maximalen Wert liegenden Druck einer Hydraulikflüssigkeit handeln, mit welcher ein Hydraulikzylinder eines Laders ansteuerbar ist, wobei der Lader an einem Traktor adaptiert sein kann. Eine solche Situation kann beispielsweise auf eine Überlastung beim Anheben der Laderschaufel aufmerksam machen.

Das mindestens eine Bedienpedal kann mit einer vorgebbaren veränderten Kraft dann beaufschlagt werden, wenn die Drehzahl einer Welle und/oder die Drehzahl einer Welle eines Arbeitsgeräts von einer vorgegebenen Drehzahl abweicht.

Auch kann das mindestens eine Bedienpedal mit einer vorgebbaren veränderten Kraft dann beaufschlagt werden, wenn die Geschwindigkeit des Nutzfahrzeugs von einer vorgegebenen Geschwindigkeit abweicht. Falls das Nutzfahrzeug eine Arbeitsfunktion ausübt, welche eine Fortbewegung des Fahrzeugs mit einer im Wesentlichen konstanten Geschwindigkeit erfordert (z.B. Einsähen), kann durch die Veränderung der Kraft, mit welcher das mindestens eine Bedienpedal beaufschlagt wird, der Bediener auf diesen Umstand hingewiesen werden. Eine andere Anwendung, bei welcher die Geschwindigkeit des Nutzfahrzeugs einen vorgebbaren Wert aufweisen soll, ist die eines neben einer Erntemaschine herfahrenden Traktors mit einem Anhänger. Hierbei kann während des Erntevorgangs der Erntemaschine das Erntegut während der Fahrt auf einen von dem Traktor gezogenen Anhänger verbracht werden. Bei diesem Vorgang sollte die Relativposition zwischen Erntemaschine und Traktor nebst Anhänger im Wesentlichen unverändert bleiben. Dementsprechend kann dem Bediener des Traktors und/oder dem Bediener der Erntemaschine in taktiler Weise über das jeweilige Bedienpedal signalisiert werden, dass die Geschwindigkeit zu verringern oder zu vergrößern ist. Entsprechende Sensoren zur Bestimmung der Relativposition zwischen Erntemaschine und Traktor nebst Anhänger seien vorausgesetzt.

Bevorzugt ist vorgesehen, dass das mindestens eine Bedienpedal mit einer vorgebbaren veränderlichen Kraft beaufschlagbar ist, welche von der Beschaffenheit der Fahrbahn bzw. des Untergrunds abhängt. Dies kann dazu genutzt werden, den "Bonanza-Effekt" zu verringern bzw. zu vermeiden. Hierzu wird in Abhängigkeit der aktuellen Nutzfahrzeugbewegung, welche mit einem entsprechenden Bewegungs- und/oder Beschleunigungssensor detektiert wird, die Kraft derart auf das mindestens eine Bedienpedal ausgeübt, dass ein selbstverstärkendes Aufschwingen des Nutzfahrzeugs bzw. der Arbeitsfunktion bei einer durch die Nutzfahrzeugbewegung hervorgerufenen Bewegung des Bedienerfußes bei der Bedienung des mindestens einen Bedienpedals weitgehend vermieden wird.

In einer bevorzugten Ausführungsform ist vorgesehen, dass das mindestens eine Bedienpedal in seiner Neutralposition durch die Stelleinrichtung zumindest in einem bestimmten Betriebszustand des Nutzfahrzeugs mit einer vorgebbaren hohen Kraft beaufschlagbar ist. Das mindestens eine Bedienpedal ist aus seiner Neutralposition mit einer entsprechend hohen Kraftaufwendung von dem Bediener einmalig auszulenken, um das Nutzfahrzeug und/oder eine Arbeitsfunktion des Nutzfahrzeugs von einem gesicherten Zustand in einen Betriebszustand zu überführen. Hiermit kann ein so genanntes Kraftschloss der durch das mindestens eine Bedienpedal angesteuerten Funktion erzielt werden. Der Bediener muss zum Ansteuern der Funktion ein erstes Mal eine relativ hohe Kraft ausüben, um die Funktion überhaupt zu aktivieren. Wenn die Funktion dann aktiviert ist, bietet es sich an, das mindestens eine Bedienpedal nicht mehr oder erst dann wieder mit der vorgebbaren hohen Kraft zu beaufschlagen, wenn das mindestens eine Bedienpedal für längere Zeit nicht betätigt worden ist. In gleicher Weise kann eine Anfahrquittierung des Nutzfahrzeugs oder eine Schaltquittierung für einen Getriebeschaltvorgang realisiert werden, d.h. die vom Bediener tatsächlich gewollte Ansteuerung wird durch das Überwinden der hohen Kraft quittiert.

Weiterhin kann vorgesehen sein, dass das mindestens eine Bedienpedal mit einer vorgebbaren Kraft beaufschlagbar ist, um den Bediener wahrnehmbar zu machen, dass eine mit dem mindestens einen Bedienpedal kommandierte Änderung einer Zustandsgröße des Nutzfahrzeugs oder einer Arbeitsfunktion mittlerweile eingestellt worden ist. In vergleichbarer Weise kann das mindestens eine Bedienpedal mit einer vorgebbaren Kraft beaufschlagbar sein, um dem Bediener wahrnehmbar zu machen, dass ein bestimmter Zustand eines an das Nutzfahrzeug adaptierten Arbeitsgeräts vorliegt. Dies kann beispielsweise der Fall sein, wenn ein Arbeitsgerät zugeschaltet wird und dieses erst nach einer Zeitverzögerung seine Betriebsdrehzahl erreicht. Sobald diese vorliegt, kann das mindestens eine Bedienpedal mit einem Kraftimpuls beaufschlagt werden.

Bevorzugt ist die Höhe der Kraft, mit welcher das mindestens eine Bedienpedal beaufschlagbar ist, von dem Bediener individuell einstellbar. Hierdurch kann beispielsweise jeder Bediener eine für sich individuell angepasste Bedienungscharakteristik des mindestens einen Bedienpedals einstellen und gegebenenfalls abspeichern. Dies ermöglicht eine für ihn individuell angepasste Einstellung der Bedienpedalcharakteristik und kann somit Fehlbedienungen vermeiden und/oder eine individuelle ergonomische Bedienung ermöglichen.

In einer bevorzugten Ausführungsform ist dem mindestens einen Bedienpedal eine vorgebbare Bedienungscharakteristik derart aufprägbar, dass ein Bediener eine - gegebenenfalls von ihm einstellbare - angestrebte Einstellung, eine Auslenkungsposition oder einen Auslenkungsbereich des mindestens einen Bedienpedals wiederfinden kann. Bei einer solchen angestrebten Einstellung kann es sich um eine Geschwindigkeit oder einen Geschwindigkeitsbereich für eine bestimmte Anwendung bzw. einen bestimmten Arbeitseinsatz des Nutzfahrzeugs handeln. In vergleichbarer Weise kann ein einstellbarer "Anschlag" des mindestens einen Bedienpedals vorgesehen sein, welcher gegebenenfalls vom Bediener vorgebbar bzw. einstellbar ist, welcher das Auffinden einer bestimmten Geschwindigkeitsgrenze ermöglicht.

Gemäß einer bevorzugten Ausführungsform der vorliegenden Erfindung ist das mindestens eine Bedienpedal derart mit einer Kraft beaufschlagbar, dass ein Bediener einen ungünstigen Einstellungsbereich eines Betriebszustands einer Arbeitsfunktion oder einer Zustandsgröße des Nutzfahrzeugs - z.B. die Eigenfrequenz der Reifen bei bestimmten Drehzahlen - meidet. Einen ungünstigen Einstellungsbereich kann auch die motordrehzahlabhängige Eigenfrequenz der Motoraufhängung und/oder die Eigenfrequenz der Fahrzeugkarosserie aufweisen, und es kann daher in vergleichbarer Weise durch entsprechende Kraftbeaufschlagung des mindestens einen Bedienpedals dem Bediener signalisiert werden, diese Einstellung zu meiden.

In einer weiteren Ausführungsform ist das mindestens eine Bedienpedal mit einer vorgebbaren Kraft beaufschlagbar, welche im Wesentlichen von dem Zustand eines anderen Bedienelements des Nutzfahrzeugs abhängig ist. Hierdurch kann z.B. eine gegenseitige Verriegelung von mehreren Bedienelementen simuliert oder eine Fehlbedienung des Nutzfahrzeugs verhindert werden.

Es kann vorgesehen sein, dass die von der Stelleinrichtung auf das mindestens eine Bedienpedal ausgeübte Kraft von dem Bediener übersteuerbar und/oder abschaltbar ist. Eine Übersteuerung der auf das mindestens eine Bedienpedal ausgeübten Kraft durch den Bediener sollte im Allgemeinen möglich sein, denn der Bediener soll nicht nur das Gefühl haben, dass er die Kontrolle über die Bedienung des Fahrzeugs hat. Vielmehr soll aus Sicherheitsgründen das Fahrzeug von dem Bediener auch dann bedient werden können, wenn das mindestens eine Bedienpedal mit einer falschen Kraft beaufschlagt wird. Dies kann dann der Fall sein, wenn der mindestens eine Sensor eine Größe fehlerhaft detektiert oder die detektierte Größe fehlerhaft interpretiert wird, wenn dies auch nur mit einer geringen Wahrscheinlichkeit auftritt. Insoweit stellt die Möglichkeit des Übersteuerns einer auf das mindestens eine Bedienpedal ausgeübten Kraft eine vergleichbare Möglichkeit dar, die ein Fahrzeugbediener mit einem Navigationsgerät hat. Auch dort kann der Bediener entscheiden, ob er die von dem Navigationsgerät vorgeschlagene Route oder eine andere Route wählt. Obwohl grundsätzlich möglich, jedoch nicht bevorzugt, ist mit der erfindungsgemäßen Bedienvorrichtung nicht beabsichtigt, eine so genannte Autopilot- bzw. Auto-Track-Funktion zu realisieren, bei welcher eine Steuereinrichtung des Nutzfahrzeugs die Steuerung des Nutzfahrzeugs vollständig übernimmt und der Bediener diese gegebenenfalls übersteuern kann.

Wie bereits angedeutet, kann zusätzlich zum Beaufschlagen des mindestens einen Bedienpedals mit einer vorgebbaren Kraft ein visuelles und/oder akustisches Signal erzeugt werden. Dies bietet sich insbesondere dann an, wenn ein sicherer Betriebszustand des Nutzfahrzeugs und/oder einer Arbeitsfunktion verlassen wird. In diesem Fall kann beispielsweise eine Lichtquelle aktiviert werden, eventuell mit zunehmender Lichtstärke bei zunehmendem Gefährlichkeitsgrad. Zusätzlich oder alternativ kann über einen Lautsprecher ein akustisches Signal in Form eines Warntons, gegebenenfalls mit zunehmender Lautstärke, erzeugt und dem Bediener zur Kenntnis gebracht werden. Somit kann vorgesehen sein, dass ein Bediener taktil an dem mindestens einen Bedienpedal sowie visuell und akustisch in der Kabine vor einem Sicherheitsrisiko gewarnt werden kann, vorzugsweise betreffend einer Funktion, welche mit dem mindestens einen Bedienpedal angesteuert wird.

Das Nutzfahrzeug, welches eine erfindungsgemäße Bedienvorrichtung aufweist, kann eine selbstfahrende Arbeitsmaschine bzw. eine Zugmaschine des Bereichs Landwirtschaft, Bau oder Forst sein. Insbesondere kann das Nutzfahrzeug in Form eines Traktors, einer Erntemaschine, eines Mähdreschers, eines Feldhäckslers, einer Baumaschine und/oder einer Forstmaschine ausgebildet sein. Dementsprechend kann die von dem mindestens einen Bedienpedal der Bedienvorrichtung angesteuerte Funktion eine für das jeweilige Nutzfahrzeug charakteristische Nutzfahrzeug- oder Arbeitsfunktion sein.

Die eingangs genannte Aufgabe wird hinsichtlich eines landwirtschaftlichen oder industriellen Nutzfahrzeugs, insbesondere Traktor, durch die Merkmale des Patentanspruchs 14 gelöst. Demgemäß weist ein solches Nutzfahrzeug eine Bedienvorrichtung nach einem der Patentansprüche 1 bis 13 auf. Der auf dem vorliegenden Gebiet tätige Fachmann wird in Kenntnis einer erfindungsgemäßen Bedienvorrichtung gemäß einem der Patentannsprüche 1 bis 13 sowie der hierzu gemachten Ausführungen diese Technologie auf ein landwirtschaftliches oder industrielles Nutzfahrzeug anwenden können und hierbei die besondere Eigenschaften des jeweiligen Nutzfahrzeugs in Zusammenhang mit der erfindungsgemäßen Bedienvorrichtung gemäß einem der Patentansprüche 1 bis 13 berücksichtigen können. Insoweit wird zur Vermeidung von Wiederholungen auf den vorangegangenen Teil der Beschreibung verwiesen.

In verfahrensmäßiger Hinsicht wird die eingangs genannte Aufgabe durch die Merkmale des Patentanspruchs 15 gelöst. Demgemäß dient ein erfindungsgemäßes Verfahren zum Ansteuern mindestens einer Zustandsgröße eines landwirtschaftlichen oder industriellen Nutzfahrzeugs. Die mindestens eine Zustandsgröße wird mit einer Bedienvorrichtung eingestellt. Die Bedienvorrichtung umfasst mindestens ein Bedienpedal, insbesondere einen Joystick, eine Stelleinrichtung, mindestens einen Sensor und eine Steuereinrichtung. Das mindestens eine Bedienpedal wird von einem Fuß eines Bedieners betätigt. Mit dem mindestens einen Bedienpedal wird eine Zustandsgröße des Nutzfahrzeugs eingestellt. Mit der Stelleinrichtung wird das mindestens eine Bedienpedal mit einer Kraft beaufschlagt. Mit dem mindestens einen Sensor wird eine Größe, die eine Zustandsgröße des Nutzfahrzeugs repräsentiert, detektiert und der Steuereinrichtung übermittelt. Mit der Steuereinrichtung wird eine Zustandsgröße des aktuellen Betriebszustands des Nutzfahrzeugs ermittelt. Mit der Steuereinrichtung wird in Abhängigkeit des aktuellen Betriebszustands des Nutzfahrzeugs die Stelleinrichtung derart angesteuert, dass das mindestens eine Bedienpedal mit einer vorgebbaren veränderten Kraft beaufschlagt wird, um dem Bediener einen nicht optimalen Betriebszustand des Nutzfahrzeugs oder einen nicht optimalen Betriebszustand mindestens einer Arbeitsfunktion wahrnehmbar zu machen.

Dementsprechend wird durch das erfindungsgemäße Verfahren zum Ansteuern mindestens einer Zustandsgröße eines Nutzfahrzeugs eine verbesserte Bedienung des Nutzfahrzeugs realisiert, wodurch beispielsweise die Einlernphase eines neuen Bedieners in die Bedienung des Nutzfahrzeugs verkürzt werden kann und/oder die Bedienung des Nutzfahrzeugs erheblich vereinfacht oder intuitiver gestaltet werden kann. Bevorzugt wird mit dem erfindungsgemäßen Verfahren mindestens eine Zustandsgröße mit einer Bedienvorrichtung nach einem der Patentansprüche 1 bis 13 eingestellt. Daher wird ein auf dem vorliegenden Gebiet tätiger Fachmann in Kenntnis der erfindungsgemäßen Bedienvorrichtung gemäß einem der Patentansprüche 1 bis 13 sowie der hierzu gemachten Ausführungen diese Technologie auf ein Verfahren zum Ansteuern eines bestimmten landwirtschaftlichen oder industriellen Nutzfahrzeugs anwenden und hierbei die besonderen Eigenschaften des jeweiligen Nutzfahrzeugs beim Ausbilden des Ansteuerverfahrens berücksichtigen können. Insoweit wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der erfindungsgemäßen Lehre erläutert. In den Zeichnungen zeigen jeweils in einer schematischen Darstellung:
- Fig. 1: ein Ausführungsbeispiel einer erfindungsgemäßen Bedienvorrichtung,
- Fig. 2: ein Ausführungsbeispiel eines landwirtschaftlichen Nutzfahrzeugs mit einer erfindungsgemäßen Bedienvorrichtung,
- Fig. 3a: ein Gespann, bestehend aus einem landwirtschaftlichen Nutzfahrzeug und einem Anhänger, welches neben einer Erntemaschine herfährt,
- Fig. 3b: ein Diagramm der auf das Bedienpedal ausgeübten Kraft in Abhängigkeit der Relativposition zwischen Gespann und Erntemaschine,
- Fig. 4a: ein auf ein Hindernis zufahrendes landwirtschaftliches Nutzfahrzeug,
- Fig. 4b: ein Diagramm der auf das mindestens eine Bedienpedal ausgeübten Kraft in Abhängigkeit des Abstands zum Hindernis,
- Fig. 5: ein Diagramm, in welchem die vertikale Beschleunigung des Fahrzeugs in Abhängigkeit der Fahrzeuggeschwindigkeit und die von der Stelleinrichtung auf das Gaspedal ausgeübte Kraft in Abhängigkeit des Pedalwegs aufgetragen ist.

In den Figuren sind gleiche oder ähnliche Bauteile mit denselben Bezugszeichen gekennzeichnet.

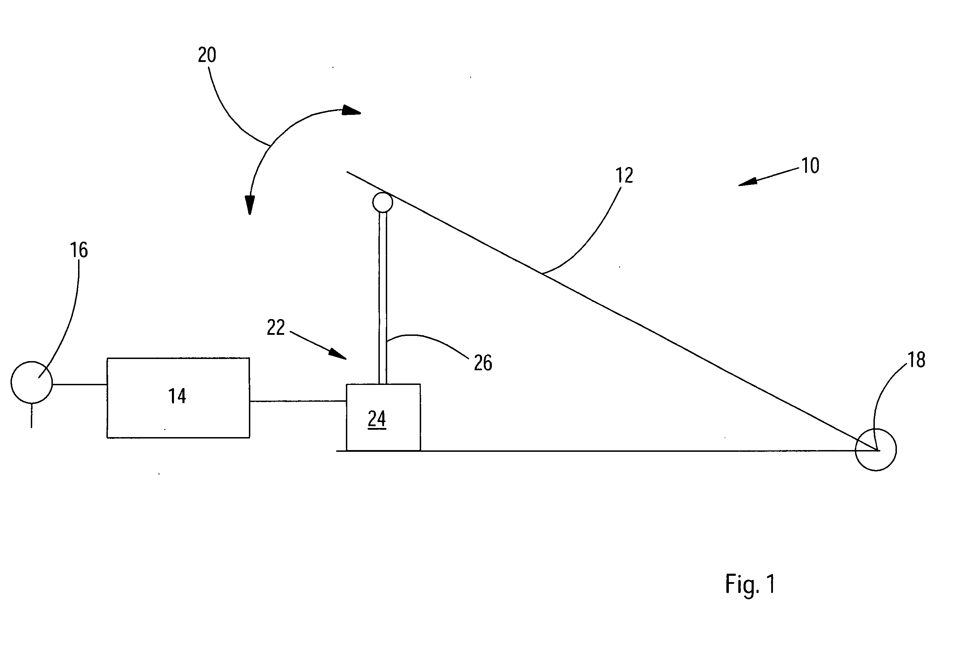

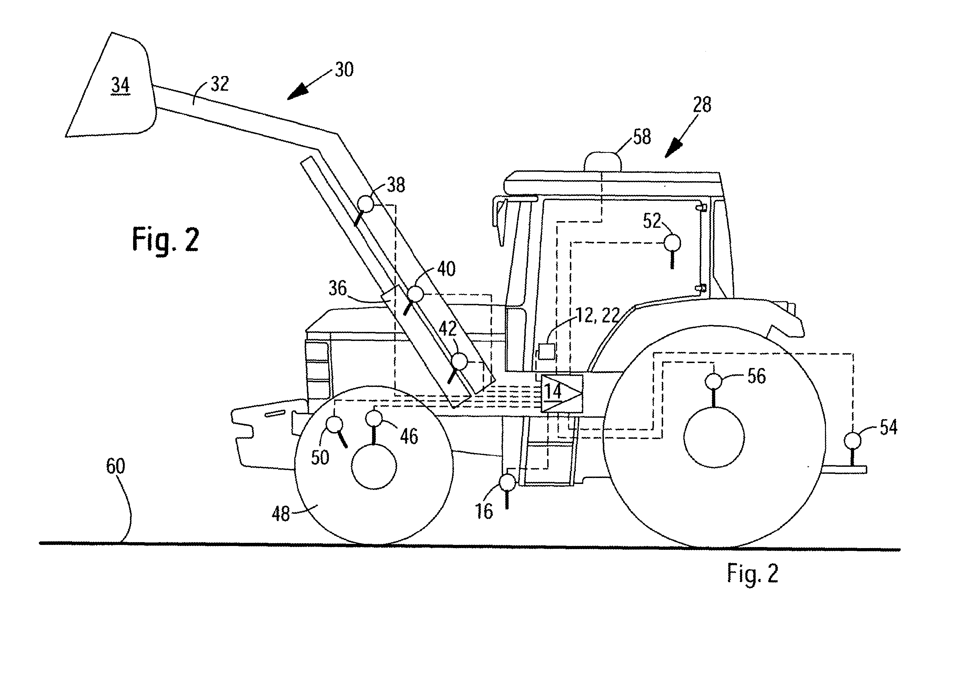

Fig. 1 zeigt ein Ausführungsbeispiel einer erfindungsgemäßen Bedienvorrichtung 10. Die in Fig. 1 gezeigte Bedienvorrichtung 10 weist ein Bedienpedal 12, eine Steuereinrichtung 14 und einen Sensor 16 auf. Das Bedienpedal 12 ist in Form eines Gaspedals ausgebildet und um die Achse 18 in Richtung des Doppelpfeils 20 verschwenkbar. Die in Fig. 1 gezeigte Bedienvorrichtung 10 steuert die Geschwindigkeit des in Fig. 2 gezeigten und in Form eines Traktors ausgebildeten landwirtschaftlichen Nutzfahrzeugs. Die Bedienvorrichtung 10 umfasst des Weiteren eine Stelleinrichtung 22, welche einen Aktuator 24 aufweist. Bei dem Aktuator 24 handelt es sich um ein elektrisch angesteuertes Bauteil, welches nach dem Tauchspulenprinzip arbeitet. Mit dem Aktuator 24 kann die Kolbenstange 26 nach oben und oder nach unten bewegt werden bzw. in beide Richtungen mit Kraft beaufschlagt werden, wodurch das Bedienpedal 12 entlang der Richtung des Doppelpfeils 20 verschwenkbar ist. Die Kolbenstange 26 ist gelenkig mit dem Bedienpedal 12 verbunden. Der Aktuator 24 beaufschlagt über die Kolbenstange 26 das Bedienpedal 12 mit einer Druck- oder Zugkraft. An dem Aktuator 24 ist ein nicht eingezeichneter Sensor vorgesehen, mit welchem die aktuelle Stellung des Bedienpedals 12 ermittelbar ist, welche der Steuereinrichtung 14 zugeleitet werden kann. Der Sensor 16 detektiert die Geschwindigkeit des Nutzfahrzeugs, welche der Steuereinrichtung 14 übermittelt wird.

Erfindungsgemäß wird mit der Steuereinrichtung 14 in Abhängigkeit des aktuellen Betriebszustands des Nutzfahrzeugs die Stelleinrichtung 22 und somit der Aktuator 24 derart angesteuert, dass das Bedienpedal 12 mit einer vorgebbaren veränderten Kraft beaufschlagbar ist. Hierdurch kann einem in Fig. 1 nicht gezeigten Bediener ein nicht optimaler oder unsicherer Betriebszustand des Nutzfahrzeugs bzw. des Traktors wahrnehmbar gemacht werden. Dementsprechend kann durch das Beaufschlagen des Bedienpedals 12 mit einer vorgebbaren veränderten Kraft durch die Stelleinrichtung 22 die Bedienungscharakteristik des Bedienpedals 12 verändert werden.

Fig. 2 zeigt ein landwirtschaftliches Nutzfahrzeug, nämlich einen Traktor 28, welcher die erfindungsgemäße Bedienvorrichtung 10 aus Fig. 1 aufweist. An dem Traktor 28 ist der Frontlader 30 adaptiert, welcher einen Ausleger 32 und eine Laderschaufel 34 aufweist. Der Ausleger 32 des Frontladers 30 kann mit dem doppeltwirkenden Hydraulikzylinder 36 angehoben bzw. abgesenkt werden.

An dem Traktor 28 bzw. dem Frontlader 30 sind mehrere Sensoren angeordnet, wobei nicht alle Sensoren zum Ausführen der vorliegenden Erfindung erforderlich sind. So kann mit dem Sensor 38 der Ausfahrweg der Kolbenstange des Hydraulikzylinders 36 bestimmt werden. Mit dem Sensor 40 kann die Veränderung des Volumenstroms der Hydraulikflüssigkeit gemessen werden, welche dem Hydraulikzylinder 36 zugeführt wird bzw. welche vom Hydraulikzylinder 36 abfließt. Mit dem Sensor 42 kann der im Kolbenraum des Hydraulikzylinders 36 vorliegende Druck der Hydraulikflüssigkeit gemessen werden. Der Sensor 16 detektiert die Fahrzeuggeschwindigkeit über dem Untergrund 60. Sensor 46 detektiert die Drehzahl des linken Vorderrads 48. Für die anderen drei Räder sind ebenfalls Sensoren vorgesehen, welche jedoch in Fig. 2 nicht gezeigt sind. Der Sensor 50 detektiert den eingestellten Lenkwinkel des Vorderrads 48. Der Sensor 52 detektiert die Beschleunigung des Traktors 28. Der Sensor 54 detektiert die Kraft, welche ein an den Traktor 28 adaptiertes, in Fig. 2 nicht gezeigtes Arbeitsgerät in den Traktor 28 einleitet. Mit dem Sensor 56 kann das auf den hinteren Fahrantrieb übertragene Drehmoment detektiert werden. Weiterhin ist ein GPS-Empfänger 58 vorgesehen, mit welchem GPS-Positionssignale empfangen werden können, aus welchen die Steuereinheit 14 die aktuelle Position des Traktors 28 ermitteln kann. Sämtliche Sensoren sind mittels elektrischer Leitungsverbindungen mit der Steuereinheit 14 verbunden. Auch ist die Stelleinrichtung 22 mit dem in Fig. 2 nicht gezeigten Aktuator mit der Steuereinrichtung 14 verbunden. Obwohl in Fig.2 nicht gezeigt, können noch weitere Sensoren vorgesehen sein, mit welchen weitere Größen detektierbar sind und aus welchen sich eine entsprechende Zustandsgröße des Nutzfahrzeugs oder einer Arbeitsfunktion bzw. aus welchen sich eine Zustandsgröße eines an das Nutzfahrzeug adaptierten Arbeitsgeräts ableiten bzw. bestimmen lässt.

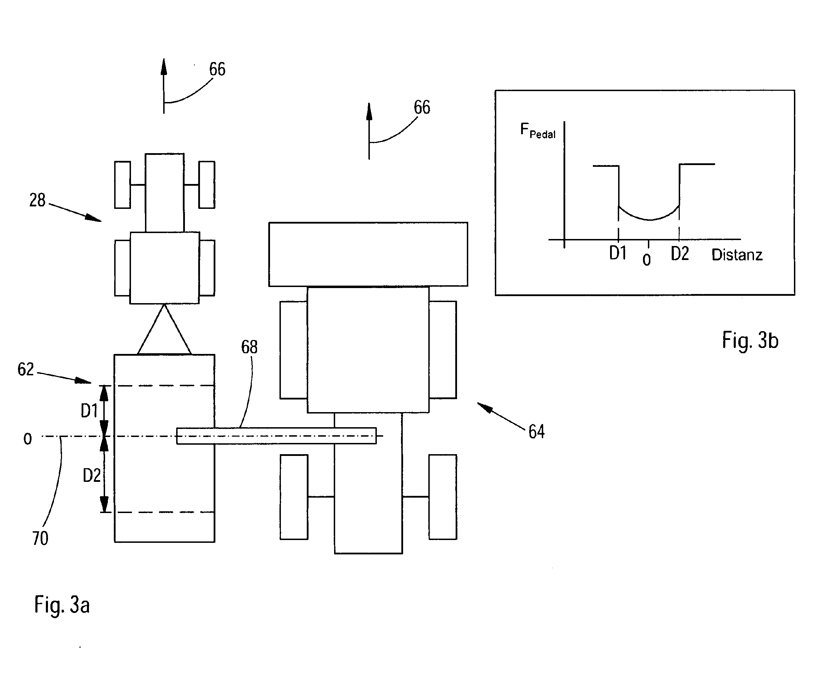

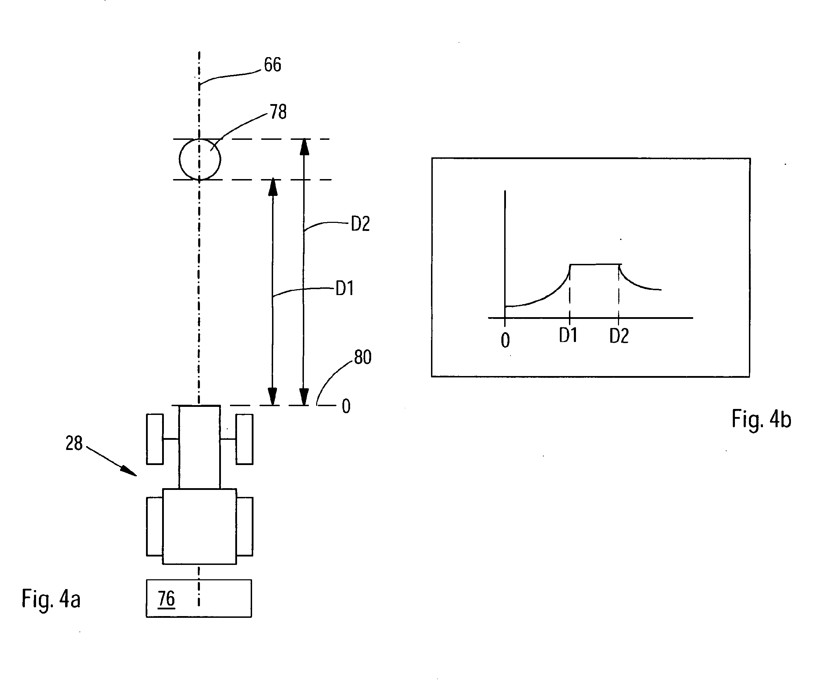

Mit den in Fig. 3a und 4a angedeuteten Darstellungen und den dazugehörigen Diagrammen der Fig. 3b und 4b der auf das Bedienpedal 12 jeweils ausgeübten Kraft in Abhängigkeit der jeweils einzustellenden Größe werden lediglich einige der Ausführungsbeispiele einer erfindungsgemäßen Bedienvorrichtung dargestellt, wobei eine Vielzahl weiterer Ausführungsbeispiele denkbar ist, bei welchen eine erfindungsgemäße Bedieneinrichtung zum Ansteuern mindestens einer Zustandsgröße eines landwirtschaftlichen oder industriellen Nutzfahrzeugs zum Einsatz kommen kann.

Fig. 3a zeigt ein Gespann, bestehend aus einem Traktor 28 und einem Anhänger 62. Neben dem Traktor 28 fährt eine Erntemaschine 64 in die gleiche Richtung (jeweils durch einen Pfeil 66 angedeutet). Die Erntemaschine 64 weist eine Überladevorrichtung 68 auf, mit welcher Erntegut in den Anhänger 62 verbracht wird. Bei diesem Überladevorgang ist es erforderlich, dass die Relativposition zwischen dem Anhänger 62 und der Erntemaschine 64 im Wesentlichen unverändert bleibt. Mit dem Bezugszeichen 70 ist gestrichelt eine Bezugslinie eingezeichnet, bezüglich welcher sowohl der Anhänger 62 als auch die Erntemaschine 64 in Fahrtrichtung 66 eine ideale bzw. vorgebbare Relativposition aufweist. Somit ist die Geschwindigkeit des Traktors 28 an die Geschwindigkeit der Erntemaschine 64 anzupassen. Dieser Vorgang wird durch die erfindungsgemäße Bedienvorrichtung unterstützt. Die Bedienvorrichtung ist in dem Traktor 28 implementiert. Demgemäß wird das Gaspedal des Traktors 28 mit einer Kraft beaufschlagt, deren Kennlinie in dem Diagramm aus Fig. 3b gezeigt ist. In diesem Diagramm ist die von der Stelleinrichtung auf das Gaspedal ausgeübte Kraft in Abhängigkeit des Abstands von der Position der Überladevorrichtung 68 relativ zu der Bezugslinie 70 aufgetragen. In Fig. 3a ist ein vorderer und ein hinterer Abstand D1, D2 mit gestrichelt eingezeichneten Linien angedeutet, wobei die Überladevorrichtung 68 nicht jenseits dieser gestrichelt eingezeichneten Linien positioniert werden soll. Die Abstände D1 und D2 sind auch in dem Diagramm gemäß Fig. 3b eingezeichnet. Sobald der Abstand kleiner als D1 oder größer als D2 wird, wird auf das Gaspedal eine höhere Kraft ausgeübt, als dies in dem Abstandsbereich zwischen den Abständen D1 und D2 der Fall ist. Innerhalb des Abstandsbereichs steigt die auf das Gaspedal ausgeübte Kraft leicht bzw. streng monoton an. Dementsprechend existiert ein Pedalstellungsbereich, in welchem der Bediener eine relativ geringe Kraft zum Bedienen des Gaspedals aufwenden muss und daher beim Einhalten der Geschwindigkeit der Erntemaschine 64 unterstützt wird. Will er schneller oder langsamer fahren, muss er eine höhere Kraft auf das Gaspedal ausüben.

Grundsätzlich kann eine Bedienvorrichtung auch in der Erntemaschine 64 vorgesehen sein, wobei diese dann derart betrieben werden kann, dass die Fahrzeuggeschwindigkeit der Erntemaschine 64 auf einen optimalen Ernteeinsatz abgestimmt ist.

Fig. 4a zeigt einen Traktor 28, an welchem eine Ballenpresse 76 adaptiert ist. Das Gespann, bestehend aus Traktor 28 und Ballenpresse 76, bewegt sich entlang der Fahrtrichtung 66. Ausgehend von der in Fig. 4a gezeigten Position des Gespanns befindet sich in dem Abstand D1 ein Hindernis 78, welches in Form eines Baumes oder eines (im Feld in der Regel nicht sichtbaren) Gullydeckels ausgebildet sein kann. Informationen über Hindernisse oder sonstige Begebenheiten des Feldes können beispielsweise in einem auf einem Rechner des Traktors implementierten Programm, welches mit einem Navigationssystem gekoppelt ist, in einer Landkarte des Feldes eingegeben werden. Fig. 4b zeigt in einem Diagramm die auf das Gaspedal von der Stelleinrichtung ausgeübte Kraft in Abhängigkeit von dem Abstand bezüglich der Bezugslinie 80, welche die in Fig. 4a gezeigte Position des Gespanns kennzeichnet. Dementsprechend wird das Gaspedal von der Stelleinrichtung mit abnehmender Distanz mit einer zunehmenden Kraft beaufschlagt, so dass der Bediener eine größere Kraft aufbringen muss, um die Geschwindigkeit des Traktors 28 zu vergrößern oder beizubehalten. Hierdurch wird ihm letztendlich signalisiert, dass er sich auf das Hindernis 78 zubewegt. Dementsprechend kann er das Hindernis 78 seitlich umfahren, wobei in dem Bereich zwischen D1 und D2 eine konstante Kraft auf das Gaspedal ausgeübt wird. Sobald der Traktor 28 mit der Ballenpresse 76 an dem Hindernis 78 vorbeigefahren ist, wird die von der Stelleinrichtung auf das Gaspedal ausgeübte Kraft verringert.

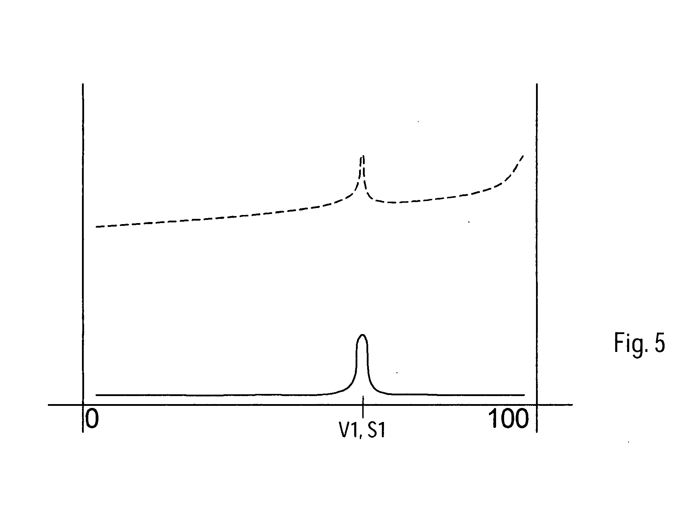

Fig. 5 zeigt ein Diagramm, in welchem einerseits die Amplitude der vertikalen Beschleunigung des Fahrzeugs in Abhängigkeit der Fahrzeuggeschwindigkeit aufgetragen ist (durchgezogene Linie). Die Fahrzeuggeschwindigkeit kann einen Wert zwischen 0 und 100 Prozent des maximalen Geschwindigkeitswerts des Fahrzeugs annehmen. Andererseits ist die von der Stelleinrichtung auf das Gaspedal ausgeübte Kraft in Abhängigkeit des Pedalwegs ebenfalls prozentual eingezeichnet (gestrichelte Linie). Bei dem Wert 0 befindet sich das Gaspedal in der nicht betätigten Stellung. Bei dem Wert 100 befindet sich das Gaspedal in der voll ausgelenkten Stellung, bei welcher die maximale Fahrzeuggeschwindigkeit angefordert wird. Bei dem Geschwindigkeitswert V1 tritt aufgrund des Eigenfrequenzverhaltens des Fahrzeugchassis eine maximale Vertikalbeschleunigung auf, welche in Form von Vibrationen auf den Bediener wirkt. Dementsprechend ist es zweckmäßig, diesen Geschwindigkeitswert bzw. -bereich des Traktors 28 zu vermeiden. Hierzu wird das Gaspedal von der Stelleinrichtung bei der Pedalauslenkung bzw. dem Pedalweg S1, bei welcher bzw. bei welchem das Fahrzeug die Geschwindigkeit V1 aufweist, mit einer höheren Kraft beaufschlagt. Dementsprechend wird der Fahrer diese Pedalauslenkung vermeiden und daher eine Geschwindigkeit größer oder kleiner als V1 wählen. Hierdurch kann in vorteilhafter Weise der so genannte Bonanza-Effekt vermieden werden, bei welchem auf Grund der Vibrationen des Traktors eine Bewegung des Bedienerfußes hervorgerufen wird und die Fahrzeuggeschwindigkeit stark variiert und daher das Fahrzeug sich aufschwingen kann.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Bedienvorrichtung zum Ansteuern mindestens einer Zustandsgröße eines landwirtschaftlichen oder industriellen Nutzfahrzeugs, mit mindestens einem Bedienpedal (12), insbesondere einem Gaspedal, einer Stelleinrichtung (22), mindestens einem Sensor (16) und einer Steuereinrichtung (14), wobei das mindestens eine Bedienpedal (12) von einem Fuß eines Bedieners betätigbar ist, wobei mit dem mindestens einen Bedienpedal (12) eine Zustandsgröße des Nutzfahrzeugs (28) einstellbar ist, wobei mit der Stelleinrichtung (22) das mindestens eine Bedienpedal (12) mit einer Kraft beaufschlagbar ist, wobei mit dem mindestens einen Sensor (16) eine Größe, die eine Zustandsgröße des Nutzfahrzeugs (28) repräsentiert, detektierbar und der Steuereinrichtung (14) übermittelbar ist, wobei mit der Steuereinrichtung (14) eine Zustandsgröße des aktuellen Betriebszustands des Nutzfahrzeugs (28) ermittelbar ist, wobei mit der Steuereinrichtung (14) in Abhängigkeit des aktuellen Betriebszustands des Nutzfahrzeugs (28) die Stelleinrichtung (22) derart ansteuerbar ist, dass das mindestens eine Bedienpedal (12) mit einer vorgebbaren veränderten Kraft beaufschlagbar ist, um dem Bediener ein Abweichen von einem sicheren und/oder optimalen Betriebszustand des Nutzfahrzeugs (28) oder von einem sicheren und/oder optimalen Betriebszustand mindestens einer Arbeitsfunktion (30) wahrnehmbar zu machen, **dadurch gekennzeichnet, dass** die Vorgabe der veränderten Kraft mittels der Stelleinrichtung (22) derart erfolgt, dass dem Bedienpedal (12) ein Verstellwiderstand aufgeprägt wird, der mit dem Betrag der Differenz zwischen einer momentanen Stellung des Bedienpedals (12) und einer bezüglich des sicheren und/oder optimalen Betriebszustands des Nutzfahrzeugs (28) oder der mindestens einen Arbeitsfunktion (30) berechneten Stellung des Bedienpedals (12) zunimmt.

2. Bedienvorrichtung nach Anspruch 1, **dadurch gekennzeichnet, dass** das mindestens eine Bedienpedal (12) in Form eines Gaspedals ausgebildet ist, mit welchem die Motordrehzahl oder die Geschwindigkeit des Nutzfahrzeugs (28) einstellbar ist, und/oder dass das mindestens eine Bedienpedal (12) in Form eines Bremspedals ausgebildet ist, mit welchem die Motordrehzahl oder die Geschwindigkeit des Nutzfahrzeugs (28) einstellbar ist, und/oder dass das mindestens eine Bedienpedal (12) in Form eines Kupplungspedals ausgebildet ist, mit welchem ein Schaltzustand einer Kupplung eines Getriebes betätigbar ist.

3. Bedienvorrichtung nach Anspruch 1 oder 2, **dadurch gekennzeichnet, dass** die Stelleinrichtung (22) das mindestens eine Bedienpedal (12) mit einem vorgebbaren Kraftverlauf beaufschlagt, wobei der Kraftverlauf in Abhängigkeit des Betätigungswegs des mindestens einen Bedienpedals (12) oder der anzusteuernden Zustandsgröße eine stetige analytische Funktion aufweist.

4. Bedienvorrichtung nach einem der Ansprüche 1 bis 3, **dadurch gekennzeichnet, dass** die Stelleinrichtung (22) das in der neutralen Position befindliche oder in einer beliebigen Position befindliche mindestens eine Bedienpedal (12) mit einer zeitlich veränderlichen Kraft beaufschlagt.

5. Bedienvorrichtung nach einem der Ansprüche 1 bis 4, **dadurch gekennzeichnet, dass** das mindestens eine Bedienpedal (12) mit einer vorgebbaren veränderten Kraft dann beaufschlagt wird, wenn der aktuelle Betriebszustand und/oder eine aktuelle Zustandsgröße des Nutzfahrzeugs (28) oder einer Arbeitsfunktion des Nutzfahrzeugs (28) einen vorgegebenen Grenzwert über- oder unterschreitet.

6. Bedienvorrichtung nach einem der Ansprüche 1 bis 5, **dadurch gekennzeichnet, dass** dem mindestens einen Bedienpedal (12) eine vorgebbare Bedienungscharakteristik derart aufprägbar ist, dass ein Bediener eine angestrebte Einstellung, eine Auslenkungsposition oder einen Auslenkungsbereich des mindestens einen Bedienpedals (12) wiederfinden kann.

7. Bedienvorrichtung nach einem der Ansprüche 1 bis 6, **dadurch gekennzeichnet, dass** das mindestens eine Bedienpedal (12) derart mit einer Kraft beaufschlagbar ist, dass ein Bediener einen ungünstigen Einstellungsbereich eines Betriebszustands einer Arbeitsfunktion (30) oder Zustandsgröße des Nutzfahrzeugs (28) meidet.

8. Bedienvorrichtung nach einem der Ansprüche 1 bis 7, **dadurch gekennzeichnet, dass** die von der Stelleinrichtung (22) auf das mindestens eine Bedienpedal (12) ausgeübte Kraft von dem Bediener übersteuerbar und/oder abschaltbar ist.

9. Bedienvorrichtung nach einem der Ansprüche 1 bis 8, **dadurch gekennzeichnet, dass** zusätzlich zum Beaufschlagen des mindestens einen Bedienpedals (12) mit einer vorgebbaren Kraft ein visuelles und/oder akustisches Signal erzeugbar ist.

10. Landwirtschaftliches oder industrielles Nutzfahrzeug, insbesondere Traktor, welches eine Bedienvorrichtung (10) nach einem der Ansprüche 1 bis 9 aufweist.

## Claims

1. Operating device for controlling at least one state variable of an agricultural or industrial utility vehicle, comprising at least one operating pedal (12), in particular an accelerator pedal, an adjusting device (22), at least one sensor (16) and a control device (14), the at least one operating pedal (12) being able to be actuated by a foot of an operator, by means of the at least one operating pedal (12) a state variable of the utility vehicle (28) being able to be set, by means of the adjusting device (22) the at least one operating pedal (12) being able to be acted upon by a force, by means of the at least one sensor (16) a variable representing a state variable of the utility vehicle (28) being able to be detected and transmitted to the control device (14), by means of the control device (14) a state variable of the current operating state of the utility vehicle (28) being able to be detected, by means of the control device (14), depending on the current operating state of the utility vehicle (28), the adjusting device (22) being able to be controlled such that the at least one operating pedal (12) may be acted upon by a predeterminable altered force, in order to make the operator aware of a deviation from a safe and/or optimal operating state of the utility vehicle (28) or from a safe and/or optimal operating state of at least one operating function (30), **characterized in that** the altered force is predefined by means of the adjusting device (22) in such a way that a displacement resistance is imparted to the operating pedal (12), which displacement resistance increases with the magnitude of the difference between a present position of the operating pedal (12) and a position of the operating pedal (12) calculated with regard to the safe and/or optimum operating state of the utility vehicle (28) or of the at least one operating function (30).

2. Operating device according to Claim 1, **characterized in that** the at least one operating pedal (12) is designed in the form of an accelerator pedal, by means of which the engine speed or the speed of the utility vehicle (28) may be set and/or that the at least one operating pedal (12) is designed in the form of a brake pedal, by means of which the engine speed or the speed of the utility vehicle (28) may be set and/or that the at least one operating pedal (12) is designed in the form of a clutch pedal, by means of which a switching state of a clutch of a gearbox may be actuated.

3. Operating device according to Claim 1 or 2, **characterized in that** the adjusting device (22) acts upon the at least one operating pedal (12) with a predeterminable force path, the force path depending on the actuation path of the at least one operating pedal (12) or the state variable to be controlled having a constant analytical function.

4. Operating device according to one of Claims 1 to 3, **characterized in that** the adjusting device (22) acts upon the at least one operating pedal (12) located in the neutral position or in any position with a temporally variable force.

5. Operating device according to one of Claims 1 to 4, **characterized in that** the at least one operating pedal (12) is acted upon by a predeterminable variable force, when the current operating state and/or a current state variable of the utility vehicle (28) or an operating function of the utility vehicle (28) exceeds or falls below a predetermined threshold value.

6. Operating device according to one of Claims 1 to 5, **characterized in that** a predeterminable operating characteristic is able to be marked on the at least one operating pedal (12), such that an operator may relocate a desired setting, a deflected position or a deflection range of the at least one operating pedal (12).

7. Operating device according to one of Claims 1 to 6, **characterized in that** the at least one operating pedal (12) is able to be acted upon by a force such that an operator avoids a disadvantageous adjustment range of an operating state of an operating function (30) or state variable of the utility vehicle (28).

8. Operating device according to one of Claims 1 to 7, **characterized in that** the force exerted by the adjusting device (22) on the at least one operating pedal (12) is able to be overridden and/or switched off by the operator.

9. Operating device according to one of Claims 1 to 8, **characterized in that** additionally to subjecting the at least one operating pedal (12) to a predeterminable force, a visual and/or acoustic signal may be generated.

10. Agricultural or industrial utility vehicle, in particular tractor, which has an operating device (10) according to one of Claims 1 to 9.

## Revendications

1. Dispositif de commande destiné à la commande d'au moins une grandeur d'état d'un véhicule utilitaire agricole ou industriel, avec au moins une pédale de commande (12), notamment une pédale d'accélérateur, un dispositif de réglage (22), au moins un capteur (16) et un dispositif de commande (14), dans lequel ladite au moins une pédale de commande (12) peut être actionnée par un pied d'un conducteur, dans lequel une grandeur d'état du véhicule utilitaire (28) peut être réglée avec ladite au moins une pédale de commande (12), dans lequel ladite au moins une pédale de commande (12) peut être soumise à une force au moyen du dispositif de réglage (22), dans lequel une grandeur qui représente une grandeur d'état du véhicule utilitaire (28) peut être détectée au moyen dudit au moins un capteur (16) et transmise au dispositif de commande (14), dans lequel une grandeur d'état de l'état de fonctionnement actuel du véhicule utilitaire (28) peut être détectée avec le dispositif de commande (14), dans lequel le dispositif de réglage (22) peut être commandé par le dispositif de commande (14) en fonction de l'état de fonctionnement actuel du véhicule utilitaire (28), de telle manière que ladite au moins une pédale de commande (12) puisse être soumise à une force modifiée prévisible, afin de rendre perceptible par le conducteur un écart par rapport à un état de fonctionnement sûr et/ou optimal du véhicule utilitaire (28) ou par rapport à un état de fonctionnement sûr et/ou optimal d'au moins une fonction de travail (30), **caractérisé en ce que** la prévision de la force modifiée au moyen du dispositif de réglage (22) est effectuée de telle manière qu'une résistance au déplacement soit appliquée à la pédale de commande (12), résistance qui augmente avec la valeur de la différence entre une position instantanée de la pédale de commande (12) et une position de la pédale de commande (12) calculée par rapport à l'état de fonctionnement sûr et/ou optimal du véhicule utilitaire (28) ou de ladite au moins une fonction de travail (30).

2. Dispositif de commande selon la revendication 1, **caractérisé en ce que** ladite au moins une pédale de commande (12) se présente sous la forme d'une pédale d'accélérateur, avec laquelle le régime du moteur ou la vitesse du véhicule utilitaire (28) est réglable, et/ou en ce que ladite au moins une pédale de commande (12) se présente sous la forme d'une pédale de frein, avec laquelle le régime du moteur ou la vitesse du véhicule utilitaire (28) est réglable, et/ou **en ce que** ladite au moins une pédale de commande (12) se présente sous la forme d'une pédale d'embrayage, avec laquelle un état d'embrayage d'un embrayage d'une transmission peut être actionné.

3. Dispositif de commande selon la revendication 1 ou 2, **caractérisé en ce que** le dispositif de réglage (22) soumet ladite au moins une pédale de commande (12) à une allure de force prévisible, dans lequel l'allure de force présente une fonction analytique continue en fonction de la course d'actionnement de ladite au moins une pédale de commande (12) ou de la grandeur d'état à commander.

4. Dispositif de commande selon l'une quelconque des revendications 1 à 3, **caractérisé en ce que** le dispositif de réglage (22) soumet ladite au moins une pédale de commande (12), se trouvant dans la position neutre ou se trouvant dans une position quelconque, à une force variable au cours du temps.

5. Dispositif de commande selon l'une quelconque des revendications 1 à 4, **caractérisé en ce que** ladite au moins une pédale de commande (12) est soumise à une force modifiée prévisible, lorsque l'état de fonctionnement actuel et/ou une grandeur d'état actuelle du véhicule utilitaire (28) ou une fonction de travail du véhicule utilitaire (28) franchit, à la hausse ou à la baisse, une valeur limite prédéterminée.

6. Dispositif de commande selon l'une quelconque des revendications 1 à 5, **caractérisé en ce qu'**une caractéristique de commande prévisible est imprimée à ladite au moins une pédale de commande (12), de telle manière qu'un conducteur puisse retrouver un réglage recherché, une position d'enfoncement ou une plage d'enfoncement de ladite au moins une pédale de commande (12).

7. Dispositif de commande selon l'une quelconque des revendications 1 à 6, **caractérisé en ce que** ladite au moins une pédale de commande (12) peut être soumise à une force, de telle manière qu'un conducteur évite une plage de réglage défavorable d'un état de fonctionnement d'une fonction de travail (30) ou d'une grandeur d'état du véhicule utilitaire (28).

8. Dispositif de commande selon l'une quelconque des revendications 1 à 7, **caractérisé en ce que** la force exercée par le dispositif de réglage (22) sur ladite au moins une pédale de commande (12) peut être surrégulée et/ou supprimée par le conducteur.

9. Dispositif de commande selon l'une quelconque des revendications 1 à 8, **caractérisé en ce qu'**en plus de soumettre ladite au moins une pédale de commande (12) à une force prévisible, on peut produire un signal visuel et/ou acoustique.

10. Véhicule utilitaire agricole ou industriel, en particulier tracteur, qui comporte un dispositif de commande (10) selon l'une quelconque des revendications 1 à 9.
